(19) Europäisches Patentamt
European Patent Office
Office européen des brevets

(11) **EP 3 086 098 B1**

(12) **FASCICULE DE BREVET EUROPEEN**

(45) Date de publication et mention de la délivrance du brevet:
**21.11.2018 Bulletin 2018/47**

(51) Int Cl.:
***G01F 1/66*** *(2006.01)*    ***G01K 13/02*** *(2006.01)*
*G01K 11/24* *(2006.01)*    *G01F 15/02* *(2006.01)*

(21) Numéro de dépôt: **16165606.1**

(22) Date de dépôt: **15.04.2016**

(54) **SYSTÈME ET PROCÉDÉ DE MESURE D'UN DÉBIT DE FLUIDE PAR TRAITEMENT D'ONDES ACOUSTIQUES**

SYSTEM UND VERFAHREN ZUM MESSEN EINES FLUIDDURCHSATZES DURCH VERARBEITUNG VON SCHALLWELLEN

SYSTEM AND METHOD FOR MEASURING A FLOW OF FLUID BY ACOUSTIC WAVE TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2015 FR 1553550**

(43) Date de publication de la demande:
**26.10.2016 Bulletin 2016/43**

(73) Titulaire: **Commissariat à l'Énergie Atomique et aux Énergies Alternatives 75015 Paris (FR)**

(72) Inventeur: **NIKOLOVSKI, Jean-Pierre 13620 Carry-le-Rouet (FR)**

(74) Mandataire: **Bonnet, Michel Cabinet Bonnet 93, rue Réaumur - Boîte 10 75002 Paris (FR)**

(56) Documents cités:
| | |
|---|---|
| WO-A1-93/04343 | WO-A1-2008/053193 |
| WO-A1-2014/029404 | DE-A1- 4 241 225 |
| GB-A- 2 447 691 | GB-A- 2 472 087 |
| US-A- 4 481 517 | US-A- 5 001 936 |
| US-A- 5 602 343 | |

**Description**

La présente invention concerne un système de mesure d'un débit de fluide par traitement d'ondes acoustiques se propageant dans ce fluide. Elle concerne également un procédé mis en oeuvre par ce système.

Un tel système peut être envisagé notamment pour la détection de fuite dans un conduit.

C'est généralement une technologie par ultrasons qui est mise en oeuvre, c'est-à-dire une technologie mettant en oeuvre la propagation d'ondes acoustiques supérieures à 20 kHz, les ultrasons se propageant particulièrement bien dans les milieux élastiques tels que les liquides ou les gaz. La mesure de débit par ultrasons met en oeuvre des sondes émettrices et réceptrices, les deux pouvant être confondues.

Selon une première technique connue de traitement des signaux, un débitmètre à ultrasons exploite l'effet Doppler selon lequel la variation de fréquence d'un signal ultrasonore réfléchi par une particule du fluide est directement liée à la vitesse d'écoulement du fluide. Cette première technique ne nécessite au minimum qu'une seule sonde émettrice et réceptrice. En revanche, elle nécessite un protocole complexe d'émissions/réceptions et un traitement correspondant également complexe pour retrouver l'information de débit du fluide. Il en résulte un coût de fabrication et une consommation énergétique élevés.

Selon une deuxième technique connue de traitement des signaux, un débitmètre à ultrasons exploite des temps de transits différents des ondes ultrasonores selon qu'elles se propagent dans le sens ou contre le sens d'écoulement du fluide. La différence des temps de transit amont/aval et aval/amont est caractéristique d'une vitesse moyenne du fluide. Cette deuxième technique nécessite au moins deux sondes émettrices et réceptrices, l'une étant disposée en aval, l'autre en amont, comme par exemple détaillé dans le brevet FR 2 901 612 B1. Par ailleurs, la vitesse ainsi mesurée est la vitesse moyenne le long d'un trajet prédéterminé, direct ou avec réflexion(s), entre les deux sondes. Chaque sonde est alternativement émettrice et réceptrice d'une onde ultrasonore impulsionnelle dirigée vers l'autre sonde, le tout constituant, avec le trajet prédéterminé, une corde de mesure. Selon cette deuxième technique, il est souvent nécessaire de disposer de plusieurs cordes de mesures, et donc de plusieurs paires différentes de sondes émettrices et réceptrices, pour retrouver l'information de débit du fluide. En outre, la mesure se faisant par temps de transit différentiel entre impulsions ultrasonores, l'exigence de précision temporelle des mesures est contraignante et les sondes employées doivent être à réponse impulsionnelle fortement amortie. Il en résulte donc également un coût de fabrication et une consommation énergétique élevés.

Ces coûts de fabrication et ces consommations élevés des débitmètres à ultrasons connus ne permettent pas leur emploi généralisé pour des détections de fuites dans les canalisations de réseaux de distribution d'eau potable par exemple. En conséquence, de tels débitmètres sont le plus souvent installés en sortie d'usine de traitement et à l'entrée du réseau des clients, mais très peu souvent au sein même du réseau intermédiaire d'acheminement, généralement enfoui. La recherche et la localisation de fuites est alors un processus laborieux et coûteux, à tel point que l'on considère que plus de 30% de l'eau potable distribuée est perdue par absence de recherche systématique des fuites souterraines. Si le coût d'un système de mesure d'un débit de fluide par traitement d'ondes acoustiques était plus abordable, il est certain que la qualité des services de distribution d'eau s'en trouverait améliorée et le taux de fuites fortement réduit.

Selon une troisième technique connue de traitement des signaux, un débitmètre à ondes acoustiques exploite les interférences ondulatoires issues de la combinaison de deux signaux acoustiques émis simultanément, voir par exemple les documents DE 4241225 A1, US 5602343 A et GB 2447691 A.

Il peut ainsi être souhaité de prévoir un système de mesure d'un débit de fluide par traitement d'ondes acoustiques qui permette de s'affranchir d'au moins une partie des problèmes et contraintes précités, notamment qui soit simple en termes de traitement des signaux et peu coûteux à fabriquer ou en consommation énergétique.

Il est donc proposé un système de mesure d'un débit de fluide par traitement d'ondes acoustiques, comportant :

- un récepteur d'ondes acoustiques de volume après leur propagation dans le fluide, conçu pour fournir un signal électrique à partir des ondes acoustiques reçues,
- un premier émetteur d'ondes acoustiques de volume dans le fluide, destiné à être disposé en amont du récepteur par rapport au sens d'écoulement du fluide de manière à émettre des ondes acoustiques vers le récepteur,
- un dispositif de traitement de signal conçu pour déterminer une valeur de débit en fonction d'au moins une caractéristique du signal électrique fourni,

comportant en outre :

- un deuxième émetteur d'ondes acoustiques de volume dans le fluide, différent du récepteur et du premier émetteur, destiné à être disposé en aval du récepteur par rapport au sens d'écoulement du fluide de manière à émettre des ondes acoustiques vers le récepteur, et
- des moyens de synchronisation des premier et deuxième émetteurs entre eux de manière à engendrer des interférences acoustiques destructives entre les ondes acoustiques émises par le premier émetteur et celles émises par le deuxième émetteur avant leur réception par le récepteur.

Ainsi, en provoquant astucieusement des interférences destructives entre ondes acoustiques se propageant en sens inverses par rapport à l'écoulement du fluide, et en fournissant un signal résultant de ces interférences, on obtient des informations pertinentes sur le débit du fluide simplement sur la base de caractéristiques générales du signal fourni, telles qu'une valeur efficace, des paramètres spectraux ou autres de ce signal. Les variations d'interférences destructives des ondes acoustiques reçues par le récepteur sont en effet directement dépendantes des variations de débit du fluide par un effet de déphasage induit par le débit. Elles sont en outre suffisamment sensibles pour permettre de concevoir un système compact et précis dans lequel les émetteurs et le récepteur peuvent être disposés à courte distance les uns des autres.

De façon optionnelle :

- les moyens de synchronisation sont en outre conçus de manière à engendrer des interférences acoustiques constructives entre les ondes acoustiques émises par le premier émetteur et celles émises par le deuxième émetteur avant leur réception par le récepteur, et
- le dispositif de traitement de signal est en outre conçu pour déterminer une valeur de température en fonction d'au moins une caractéristique du signal électrique fourni lorsque ce dernier résulte de ces interférences acoustiques constructives.

Il a en effet été constaté que les variations d'interférences constructives des ondes acoustiques reçues par le récepteur sont directement dépendantes de variations de température du fluide, ou de température d'un conduit dans lequel s'écoule le fluide ou plus généralement de température d'un environnement dans lequel s'écoule le fluide. On obtient ainsi avantageusement des informations pertinentes sur le débit du fluide et cette température de façon conjointe.

Par ailleurs, indépendamment de leur exploitation pour une estimation de température, les caractéristiques issues des signaux électriques résultant d'interférences acoustiques constructives peuvent être utilisées pour normaliser les caractéristiques issues des signaux électriques résultant d'interférences acoustiques destructives.

De façon optionnelle également, les moyens de synchronisation sont conçus pour commander alternativement :

- l'émission simultanée, par les premier et deuxième émetteurs, d'ondes acoustiques modulées en fréquence en opposition de phase, destinées à engendrer des interférences acoustiques destructives entre elles avant leur réception par le récepteur, et
- l'émission simultanée, par les premier et deuxième émetteurs, d'ondes acoustiques modulées en fréquence en phase, destinées à engendrer des interférences acoustiques constructives entre elles avant leur réception par le récepteur.

De façon optionnelle également, un système de mesure d'un débit de fluide selon l'invention peut en outre comporter un support monolithique de couplage des premier et deuxième émetteurs et du récepteur au fluide, le premier émetteur, le deuxième émetteur et le récepteur étant disposés sur des guides d'ondes de ce support monolithique de manière à :

- être alignés,
- présenter une même distance entre les deux émetteurs, d'une part, et le récepteur, d'autre part, et
- émettre ou recevoir principalement par réfraction des ondes acoustiques vers ou depuis le fluide.

De façon optionnelle également, le support monolithique présente une base conformée avec les guides d'ondes de manière à épouser la forme d'une paroi externe d'un conduit dans lequel le fluide est destiné à s'écouler et dans lequel au moins un bracelet avec collier de serrage est prévu pour entourer le conduit dans lequel le fluide est destiné à s'écouler à l'aplomb de chacun des premier et deuxième émetteurs et du récepteur de manière à plaquer ou coller le support monolithique contre la paroi externe du conduit.

De façon optionnelle également :

- le support monolithique présente une portion inférieure surmontée d'un épaulement conformé de manière à épouser la forme d'une paroi externe d'un conduit dans lequel le fluide est destiné à s'écouler, ladite portion inférieure étant ainsi destinée à traverser la paroi du conduit en une unique ouverture traversante dont le périmètre correspond à celui de la portion inférieure,
- chaque guide d'onde comporte, le long de son axe principal de guidage des ondes acoustiques, une tige métallique dont une première extrémité supporte l'un des émetteurs ou le récepteur et dont une deuxième extrémité émerge de la base de la portion inférieure de manière à s'étendre à l'intérieur du conduit dans lequel le fluide est destiné à s'écouler, et

- au moins un bracelet avec collier de serrage est prévu pour entourer le conduit dans lequel le fluide est destiné à s'écouler à l'aplomb du support monolithique de manière à plaquer ou coller le support monolithique contre la paroi externe du conduit.

De façon optionnelle également :

- les tiges supportant les premier et deuxième émetteurs sont de même longueur et de même diamètre, et
- la tige supportant le récepteur présente une longueur supérieure à celle des tiges supportant les premier et deuxième émetteurs, de manière à s'étendre davantage à l'intérieur du conduit dans lequel le fluide est destiné à s'écouler.

De façon optionnelle également, le premier émetteur, le deuxième émetteur et le récepteur sont des transducteurs piézoélectriques résonnant en épaisseur.

Il est également proposé un procédé de mesure d'un débit de fluide par traitement d'ondes acoustiques, comportant :

- l'émission d'ondes acoustiques de volume dans le fluide, par un premier émetteur disposé en amont d'un récepteur par rapport au sens d'écoulement du fluide de manière à émettre des ondes acoustiques vers le récepteur,
- la réception, par le récepteur, d'ondes acoustiques de volume après leur propagation dans le fluide et la fourniture, par le récepteur, d'un signal électrique à partir des ondes acoustiques reçues,
- la détermination, par un dispositif de traitement de signal, d'une valeur de débit en fonction d'au moins une caractéristique du signal électrique fourni,

comportant en outre :

- l'émission d'ondes acoustiques de volume dans le fluide, par un deuxième émetteur différent du récepteur, différent du premier émetteur et disposé en aval du récepteur par rapport au sens d'écoulement du fluide de manière à émettre des ondes acoustiques vers le récepteur, et
- une synchronisation des premier et deuxième émetteurs entre eux de manière à engendrer des interférences acoustiques destructives entre les ondes acoustiques émises par le premier émetteur et celles émises par le deuxième émetteur avant leur réception par le récepteur.

De façon optionnelle, la détermination d'une valeur de débit en fonction d'au moins une caractéristique du signal électrique fourni comporte la constitution d'une signature à partir de ladite au moins une caractéristique du signal électrique fourni et la comparaison de cette signature à plusieurs signatures de référence constituées de la même façon lors d'une phase préalable d'apprentissage exécutée pour une pluralité de débits.

L'invention sera mieux comprise à l'aide de la description qui va suivre, donnée uniquement à titre d'exemple et faite en se référant aux dessins annexés dans lesquels :

- la figure 1 représente schématiquement la structure générale d'un système de mesure d'un débit de fluide et optionnellement d'une température par traitement d'ondes acoustiques, selon un premier mode de réalisation de l'invention,
- la figure 2 illustre les étapes successives d'un procédé de mesure d'un débit de fluide et optionnellement d'une température, mis en oeuvre par le système de la figure 1,
- la figure 3 illustre les étapes successives d'une phase d'apprentissage pour la mise en oeuvre d'une variante de réalisation du procédé de mesure de la figure 2,
- la figure 4 représente schématiquement une partie de la structure générale d'un système de mesure d'un débit de fluide et optionnellement d'une température par traitement d'ondes acoustiques, selon un deuxième mode de réalisation de l'invention, et
- la figure 5 est une vue selon une coupe A-A du système de la figure 4.

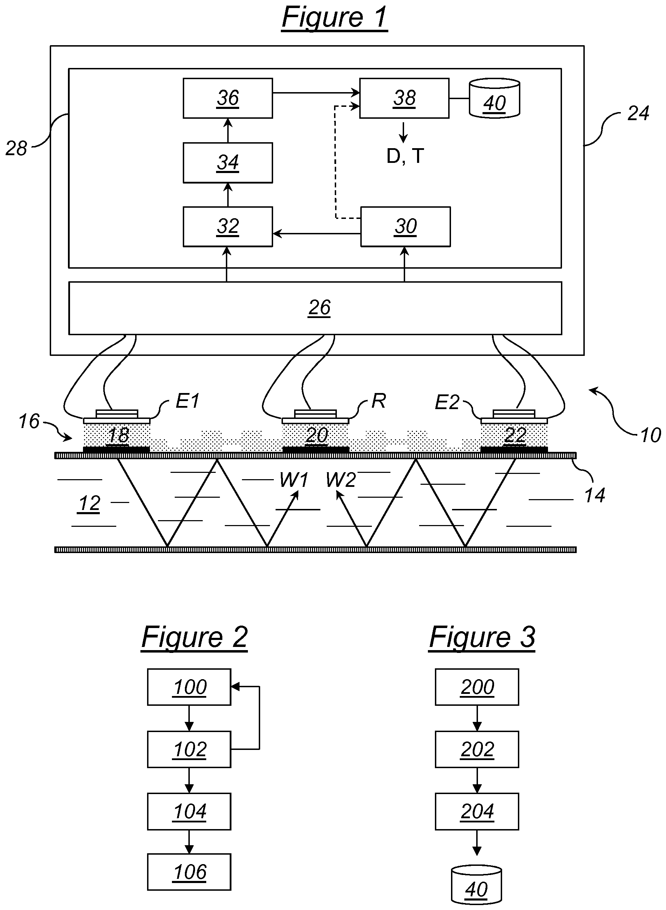

Le système 10 de mesure d'un débit de fluide, et optionnellement d'une température, par traitement d'ondes acoustiques représenté sur la figure 1 comporte un récepteur R d'ondes acoustiques de volume conçu pour fournir un signal électrique à partir des ondes acoustiques qu'il reçoit. Il s'agit d'un transducteur piézoélectrique, par exemple en céramique ferroélectrique de type PZT (Zirconate Titanate de Plomb), dans lequel la céramique est nue ou laminée sur un disque en laiton.

Il comporte en outre deux émetteurs distincts E1 et E2 d'ondes acoustiques de volume conçus pour émettre ces ondes acoustiques à partir de signaux électriques de commandes. Il s'agit également de transducteurs piézoélectriques, par exemple de type PZT. L'un est destiné à être disposé en amont du récepteur R par rapport au sens d'écoulement d'un fluide dont on souhaite évaluer le débit, de manière à émettre des ondes acoustiques vers le récepteur R. L'autre est destiné à être disposé en aval du récepteur R par rapport au sens d'écoulement du fluide dont on souhaite évaluer le débit, de manière à émettre également des ondes acoustiques vers le récepteur R.

Les transducteurs piézoélectriques E1, E2 et R prennent par exemple la forme de disques résonnant en épaisseur, d'épaisseur comprise entre 0,1 et 2 mm et de diamètre compris entre 1 et 5 mm. L'épaisseur du disque définit la fréquence de travail d'un transducteur lorsque l'on travaille à une seule fréquence qui est alors la fréquence de résonance en épaisseur du disque. Par exemple pour une fréquence de travail de 4 MHz, le disque présente une épaisseur de 0,5 mm et un diamètre compris entre 3 et 5 mm. Les tensions d'excitation vont alors généralement d'environ 3V à 200 V crête à crête, tandis que le gain de réception va de 50 à 100 dB.

Dans l'application illustrée à titre d'exemple non limitatif sur la figure 1, le fluide 12, liquide ou gazeux, dont on souhaite mesurer le débit s'écoule dans un conduit cylindrique 14 de section circulaire, par exemple selon un sens arbitraire orienté de la gauche vers la droite. Dans ce cas, c'est le premier émetteur E1 disposé à gauche du récepteur R qui est situé en amont de celui-ci selon le sens d'écoulement du fluide et le deuxième émetteur E2 disposé à droite du récepteur R qui est situé en aval de celui-ci.

Le récepteur R et les deux émetteurs E1, E2 doivent être couplés au fluide 12, de manière à émettre et recevoir principalement les ondes acoustiques de volume précitées vers et depuis ce fluide 12. Dans l'exemple de la figure 1, ce couplage est réalisé à l'aide d'un support calibré 16 commun aux trois transducteurs E1, R, E2 et servant de gabarit, conçu pour favoriser le couplage acoustique avec le fluide 12 tout en réduisant au maximum le couplage acoustique direct entre les émetteurs E 1 , E 2 et le récepteur R. Ceci est obtenu par une succession de creux, éventuellement traversant le support calibré 16, et de bosses au sein même de ce support entre les différents transducteurs, s'opposant à toute propagation acoustique directe entre eux en isolant acoustiquement le récepteur R des émetteurs E1, E2. Le support calibré 16 comprend également des éléments de guidage 18, 20 et 22 sur lesquels sont respectivement disposés, par exemple par collage, les trois transducteurs E1, R et E2. Ces éléments de guidage sont frittés ou coulés dans le support calibré 16 de sorte que ce dernier est monolithique. Ils peuvent notamment permettre d'adapter des transducteurs plans à la forme convexe du conduit 14 contre lequel est disposé le support calibré 16. Ils peuvent en outre être eux-mêmes plaqués ou collés avec la base du support calibré 16 contre la paroi externe du conduit 14, au moyen d'un joint silicone ou d'une colle époxy conductrice ou cyanoacrylate et éventuellement à l'aide d'un ou plusieurs bracelet(s) avec collier(s) de serrage (non illustré) entourant le conduit 14 à l'aplomb de chaque transducteur, de manière à améliorer encore le couplage entre les trois transducteurs E1, R, E2 et le fluide 12. Pour cela, la base du support est avantageusement conformée de manière à épouser la forme de la paroi externe du conduit 14.

Le premier émetteur E1 est plus précisément disposé de manière à émettre des ondes acoustiques W1 se propageant par réfraction dans le fluide 12 et se dirigeant dans le sens d'écoulement du fluide 12 après d'éventuelles réflexions contre la paroi interne du conduit 14 vers le récepteur R.

De manière similaire, le deuxième émetteur E2 est plus précisément disposé de manière à émettre des ondes acoustiques W2 se propageant par réfraction dans le fluide 12 et se dirigeant dans le sens contraire de l'écoulement du fluide 12 après d'éventuelles réflexions contre la paroi interne du conduit 14 vers le récepteur R.

Les ondes acoustiques W1 et W2 peuvent être émises sous une forme impulsionnelle sinusoïdale ou carrée modulée en fréquence dans une bande de fréquence comprise entre 20 kHz et 10 MHz.

Conformément à l'invention, il est souhaité de pouvoir engendrer des interférences acoustiques destructives entre les ondes acoustiques W1 émises par le premier émetteur E1 et celles W2 émises par le deuxième émetteur E2 avant leur réception par le récepteur R. Pour ce faire, il est avantageux, quoique pas indispensable, de disposer les deux émetteurs E1 et E2 à égale distance du récepteur R et d'assurer l'alignement de ces trois transducteurs dans la direction de l'écoulement de fluide 12. Cette disposition peut être facilitée par le support calibré 16 dont la symétrie, notamment celle des creux et des bosses visant à empêcher toute propagation directe d'ondes acoustiques entre les émetteurs et le récepteur, peut être assurée et centrée sur la position du récepteur R. Une telle structure symétrique du support calibré 16 permet en outre d'assurer l'interférence destructive des propagations directes résiduelles lorsqu'elles sont émises en opposition de phase. A titre d'exemple, la distance entre chaque émetteur E1, E2 et le récepteur R situé au milieu peut être comprise entre 0,5 et 100 cm, notamment autour de 25 cm. Il convient de noter que plus cette distance et la fréquence des ondes acoustiques émises sont élevées, plus la résolution sur la mesure du débit du fluide 12 est elle aussi élevée. Il peut également être optionnellement souhaité de pouvoir engendrer des interférences acoustiques constructives entre les ondes acoustiques W1 et W2.

Le système de mesure 10 comporte en outre une unité centrale électronique de commande 24 conçue pour :

- faire propager et interférer dans le fluide 12 des ondes acoustiques de volume W1, W2 à partir des émetteurs E1, E2 et faire détecter ces ondes acoustiques par le récepteur R pour obtenir un signal électrique à traiter,
- déterminer une valeur D de débit du fluide 12 en fonction d'au moins une caractéristique du signal électrique fourni par le récepteur R, cette caractéristique pouvant être directement révélatrice du débit selon une relation connue

**5**

entre une caractéristique du signal électrique fourni et le débit ou pouvant être comparée à un ensemble de caractéristiques de référence, ces caractéristiques de référence ayant été apprises lors d'une phase préalable d'apprentissage au cours de laquelle plusieurs débits sont testés, et éventuellement

- déterminer une température moyenne T du fluide 12, ou une température moyenne T du conduit 14 dans lequel s'écoule le fluide ou plus généralement une température moyenne T de l'environnement dans lequel s'écoule le fluide en fonction d'au moins une caractéristique du signal électrique fourni par le récepteur R, cette caractéristique pouvant être directement révélatrice de la température selon une relation connue entre une caractéristique du signal électrique fourni et la température ou pouvant être comparée à un ensemble de caractéristiques de référence, ces caractéristiques de référence ayant été apprises lors d'une phase préalable d'apprentissage au cours de laquelle plusieurs températures sont testées.

Plus précisément, dans l'exemple de la figure 1, l'unité centrale électronique de commande 24 comporte :

- un microcontrôleur 26 d'émission/réception des ondes acoustiques de volume raccordé électriquement aux transducteurs piézoélectriques E1, E2 et R, et
- un module de traitement 28 programmé pour traiter numériquement les signaux électriques fournis par le microcontrôleur d'émission/réception 26 pour déterminer des valeurs de débit.

Le microcontrôleur d'émission/réception 26 est en particulier programmé pour synchroniser les premier et deuxième émetteurs E1, E2 entre eux de manière à engendrer des interférences acoustiques destructives entre les ondes acoustiques qu'ils émettent avant leur réception par le récepteur R. De façon optionnelle, le microcontrôleur d'émission/réception 26 est également programmé pour synchroniser les premier et deuxième émetteurs E1, E2 entre eux de manière à engendrer des interférences acoustiques constructives entre les ondes acoustiques qu'ils émettent avant leur réception par le récepteur R. Plus précisément, le microcontrôleur d'émission/réception 26 peut être programmé pour synchroniser les premier et deuxième émetteurs E1, E2 entre eux de sorte qu'ils émettent simultanément des ondes acoustiques modulées en fréquence en opposition de phase, pour des interférences destructives, en alternance avec des émissions simultanées d'ondes acoustiques modulées en fréquence en phase, pour des interférences constructives. Il comporte pour cela une unité arithmétique et logique permettant engendrer des signaux de commande des émissions synchronisées de ces ondes acoustiques.

Le microcontrôleur d'émission/réception 26 est en outre doté d'un convertisseur numérique/analogique dont la sortie est reliée, si nécessaire via des amplificateurs, aux émetteurs E1 et E2. Par ailleurs, le récepteur R est relié à un amplificateur et à un convertisseur analogique/numérique faisant eux-mêmes partie du microcontrôleur d'émission/réception 26. Le convertisseur analogique/numérique est apte à effectuer un échantillonnage des signaux fournis par le récepteur R, par exemple sur 12 bits. L'amplificateur est apte à pré-amplifier les signaux électriques analogiques reçus de sorte qu'ils occupent la moitié de la pleine échelle de conversion analogique/numérique du convertisseur. Compte tenu des dynamiques différentes entre les émissions en phase et celles en opposition de phase, le gain appliqué aux signaux électriques résultant d'émissions en opposition de phase est largement supérieur, dix à cent fois par exemple, au gain appliqué aux signaux électriques résultant d'émissions en phase. L'amplification est par ailleurs avantageusement filtrante, s'appliquant principalement dans la limite de la bande fréquentielle des émissions acoustiques, de façon à optimiser le rapport signal/bruit des signaux électriques destinés à être traités par le module 28.

Le microcontrôleur d'émission/réception 26 est programmé pour fonctionner de la façon suivante. En même temps que les signaux acoustiques impulsionnels W1 et W2 sont émis simultanément en phase ou en opposition de phase, on commence l'acquisition du signal électrique de réception noté R(t) fourni par le récepteur R. Ce signal analogique est échantillonné de façon synchrone ou asynchrone. Dans ce dernier cas, la largeur de la fenêtre temporelle d'acquisition est supérieure ou égale à la durée des impulsions d'excitation W1, W2 et la conversion analogique/numérique commence au moment des émissions de manière que le signal électrique R(t) soit également constitué d'une impulsion contenue dans une fenêtre temporelle remplie de zéros avant et après la période d'émission. On obtient ainsi une fenêtre temporelle d'acquisition présentant une résolution fréquentielle par transformée de Fourier supérieure à la fenêtre temporelle des émissions. De plus, la période de répétition des mesures de débits est avantageusement supérieure ou égale à la fenêtre temporelle d'acquisition. En pratique elle peut même être nettement supérieure. Par exemple, compte tenu du fait qu'il peut être souhaité de limiter la consommation en énergie électrique du système de mesure 10, la cadence de mesure peut être de l'ordre d'une mesure par minute à une mesure par heure, tandis que la fenêtre temporelle d'acquisition peut être de l'ordre de la milliseconde à la seconde. Par ailleurs, la fréquence d'échantillonnage du signal électrique R(t) doit être au moins égale au double de la fréquence maximale des signaux d'excitation. Ainsi, si le microcontrôleur d'émission/réception 26 dispose d'un convertisseur analogique/numérique à fréquence d'échantillonnage de 12 MHz, la fréquence supérieure des signaux d'excitation peut aller jusqu'à 5 MHz sans aucun risque de recouvrement de spectre.

Les liaisons électriques entre le microcontrôleur d'émission/réception 26 et les transducteurs E1, E2 et R peuvent être constituées notamment de câbles coaxiaux de type audio ou de toute autre liaison blindée. Cette condition est plus forte pour le récepteur R dont on regarde les petites perturbations que pour les deux émetteurs E1 et E2.

Le microcontrôleur d'émission/réception 26 est par ailleurs relié au module de traitement 28 par un bus de transmission de données pour la fourniture des signaux électriques R(t) successifs numérisés.

Tout signal électrique $R_N(t)$ numérisé issu d'une N-ième émission d'ondes acoustiques W1, W2 en phase engendrant une interférence constructive est transmis à un premier calculateur 30 du module de traitement 28. La fonction de ce calculateur 30 est d'estimer l'efficacité de couplage des émetteurs E1, E2 avec le conduit 14 et le rendement d'insertion acoustique entrée-sortie des ondes à travers la paroi du conduit 14. Il a en effet été constaté que l'interférence constructive des ondes acoustiques permet de caractériser la qualité du couplage des émetteurs E1, E2 avec le conduit 14 et le rendement d'insertion acoustique entrée-sortie qui dépend de la température ambiante et est donc susceptible de varier très sensiblement au cours du temps. Par exemple, selon que l'on est en hiver ou en été, le jour ou la nuit, ou selon que le conduit 14 transporte un fluide chaud ou froid, l'élasticité et le volume du matériau dans lequel est constitué le conduit 14 peuvent varier considérablement de sorte que le couplage et la vitesse de propagation des ondes peuvent varier significativement avec la température. Ainsi, à une fréquence donnée et pour un même débit, le déphasage entre ondes varie avec la température et la valeur efficace du signal de réception aussi. Pour faire son estimation, le calculateur 30 fournit une valeur efficace du signal numérisé reçu noté spécifiquement $R_N[E1+E2](t)$. Cette valeur efficace est notée $Eff(R_N[E1+E2])$. Par définition, elle représente la racine carrée de la moyenne du signal $R_N[E1+E2](t)$ au carré sur un intervalle de temps correspondant à la fenêtre temporelle d'acquisition. Pour un conduit donné de diamètre et matériau connus, cette valeur efficace peut être considérée comme représentative d'une température moyenne du conduit et la variation de cette valeur efficace peut être considérée comme représentative d'une variation de température moyenne du conduit dont on peut se servir avantageusement après établissement d'une correspondance entre valeurs efficaces et températures pour fournir une estimation de température moyenne conjointement avec une estimation de débit.

Il convient de noter qu'il est également avantageux d'équilibrer les amplitudes des signaux émis par les émetteurs E1 et E2 pour qu'ils produisent individuellement la même amplitude efficace aux bornes de R quel que soit le débit. L'équilibrage est néanmoins effectué après l'opération de calcul de la valeur efficace $Eff(R_N[E1+E2])$ pour accéder à un rendement d'insertion acoustique entrée-sortie rendant réellement compte de la température.

Tout signal électrique $R_N(t)$ numérisé issu d'une N-ième émission d'ondes acoustiques W1, W2 en opposition de phase engendrant une interférence destructive est transmis à un deuxième calculateur 32 du module de traitement 28. La fonction de ce calculateur 32 est de normaliser le signal qu'il reçoit, noté spécifiquement $R_N[E1-E2](t)$, en fonction du dernier résultat fourni par le calculateur 30. Il réalise donc le calcul $R_N[E1-E2](t)/Eff(R_N[E1+E2])$, ce qui rend notamment le signal qu'il fournit en sortie indépendant des variations de température ambiante, sous réserve que les amplitudes des signaux émis par les émetteurs E1 et E2 aient bien été équilibrées au préalable. Notons $R'_N(t)$ ce signal.

Le module de traitement 28 comporte en outre un convertisseur temps/fréquence 34 qui reçoit le signal normalisé $R'_N(t)$ pour en fournir le spectre fréquentiel. Concrètement, ce spectre fréquentiel peut être simplement estimé par un calcul de FFT (de l'anglais « Fast Fourier Transform ») fournissant le spectre $FFT(R'_N(t))$. En considérant que les impulsions acoustiques émises par les émetteurs E1, E2 présentent des spectres compris dans une bande de fréquences incluses entre une fréquence minimale Fmin et une fréquence maximale Fmax, en prenant éventuellement soin d'éliminer certaines composantes fréquentielles dues à d'autres facteurs environnementaux que les propagations dans le fluide 12 d'ondes acoustiques émises par les émetteurs E1, E2, on obtient une valeur vectorielle $FFT(R'_N(t))$ à P composantes fréquentielles comprises entre Fmin et Fmax. A titre d'exemple, Fmin = 20 kHz, Fmax = 100 kHz et P = 800 pour un pas fréquentiel de 100 Hz. Plus généralement, P est avantageusement supérieur ou égal à 1, dans une bande de fréquences incluse dans les limites [20 kHz ; 10 MHz].

Le module de traitement 28 comporte en outre un extracteur 36 d'au moins une caractéristique du spectre $FFT(R'_N(t))$ obtenu à partir du signal électrique $R_N(t)$ numérisé. Dans un mode de réalisation avantageux, plusieurs caractéristiques différentes sont extraites.

Ces caractéristiques comportent par exemple une valeur efficace du signal $R'_N(t)$ ou équivalent, appelée force du signal. Conformément à l'égalité de Parseval appliquée à un signal impulsionnel d'énergie finie, le calcul de l'énergie dans le domaine temporel est égal au calcul de l'énergie dans le domaine fréquentiel. De la sorte, la force du signal $R'_N(t)$, correspondant à sa valeur efficace dans la fenêtre temporelle d'acquisition et notée $Eff(R'_N)$, peut être obtenue dans le domaine fréquentiel à partir du spectre $FFT(R'_N(t))$ de la façon suivante :

$$Eff(R'_N) = Norm\big|FFT\big(R'_N(t)\big)\big|,$$

où *Norm* est la norme euclidienne et | | un calcul de module, $FFT(R'_N(t))$ étant une valeur complexe.

Effectuer les calculs dans le domaine fréquentiel présente l'intérêt de s'affranchir de la composante continue provenant de la tension de décalage de tout amplificateur que l'on peut aisément filtrer ainsi que d'éliminer certaines fréquences non représentatives du signal acoustique mais pouvant être attribuées à certains composants électroniques de traitement tels les alimentations à découpage. En outre, le fait de travailler dans le domaine fréquentiel permet de s'affranchir des contraintes de synchronisation du signal impulsionnel fourni par le récepteur R qui peut être numérisé avec un certain retard représentant une translation temporelle et donc un simple effet de phase dans l'espace des fréquences.

Les caractéristiques extraites comportent par exemple également une valeur vectorielle de perturbation de l'écoulement de fluide 12 par rapport à une situation de référence, exprimée sous la forme suivante :

$$RD(N) = \frac{\left|FFT\left(R'_N(t)\right)\right| - \left|FFT\left(R'_0(t)\right)\right|}{\left|FFT\left(R'_0(t)\right)\right|} .$$

Cette perturbation comporte P composantes vectorielles, une par valeur de fréquence dans la bande de fréquences observée. La situation de référence, représentée par la mesure de $R'_0(t)$ en opposition de phase, correspond par exemple à une situation initiale de débit nul ou minimal à un moment prédéterminé (par exemple à trois heures du matin).

Une valeur scalaire efficace de perturbation RMSD(N) peut alors être calculée à partir de la perturbation RD(N), selon le calcul suivant :

$$RMSD(N) = \frac{1}{\sqrt{P}} Norm\big(RD(N)\big) .$$

Les caractéristiques extraites comportent par exemple également une valeur scalaire de bruit résiduel représentant une évolution entre deux mesures successives, supposée imputable notamment au bruit de quantification, dans une situation où l'on suppose que pour deux mesures successives très proches où les ondes sont émises en opposition de phase, les conditions d'écoulement n'ont pas changé et le récepteur R devrait donc fournir le même résultat. C'est une hypothèse lourde mais statistiquement souvent vérifiée. Le bruit résiduel peut être exprimé de la façon suivante :

$$BR(N) = \frac{1}{P} \sum_{k=1}^{P} \left| \frac{\left|FFT\left(R'_N(t)\right)_k\right| - \left|FFT\left(R'_{N-1}(t)\right)_k\right|}{\left|FFT\left(R'_{N-1}(t)\right)_k\right|} \right| ,$$

Où l'indice k indique la k-ième composante fréquentielle d'un vecteur considéré.

Une valeur de pourcentage RDR(N) quantifiant la perturbation RD(N) par rapport au bruit résiduel BR(N) peut alors être définie de la façon suivante :

$$RDR(N) = \left| \frac{\sum_{k=1}^{P} |RD(N)_k|}{BR(N)} - 1 \right| \cdot 100 .$$

Cette valeur de pourcentage RDR(N) permet par exemple de déterminer si la N-ième mesure est exploitable ou pas, la perturbation RD(N) ou sa valeur efficace RMSD(N) devant être suffisamment grande devant le bruit résiduel RD(N) pour être considérée comme pertinente.

Le module de traitement 28 comporte en outre un estimateur 38 de débit D en fonction d'au moins une partie des caractéristiques extraites précitées et éventuellement de caractéristiques correspondantes de référence enregistrées dans une zone de mémoire 40 à laquelle l'estimateur 38 a accès en lecture. Ces caractéristiques de référence sont relatives à différents débits appris préalablement. Pour rendre ces apprentissages indépendants de la température, il convient de les normaliser par une valeur efficace initiale $Eff(R_0[E1+E2])$ qui peut être obtenue à l'aide du calculateur 30. En variante, si les caractéristiques de référence ne sont pas normalisées par le facteur $Eff(R_0[E1+E2])$, il convient de prendre en compte ce facteur lors du calcul de normalisation effectué par le calculateur 32 :

$$R'_N(t) = R_N[E1 - E2](t) \cdot \frac{Eff(R_0[E1 + E2])}{Eff(R_N[E1 + E2])} .$$

Ainsi, à l'aide d'une relation connue entre au moins une des caractéristiques extraites et différentes valeurs de débits ou à l'aide d'une comparaison entre au moins une partie des caractéristiques extraites, appelée signature, et un ensemble de signatures de référence correspondant chacune à une valeur de débit, il est possible de déduire une valeur D de débit pour chaque mesure relevée en opposition de phase. La valeur de pourcentage RDR(N) permet par ailleurs de pondérer la pertinence de la mesure correspondante, en particulier pour la caractérisation des débits les plus faibles permettant la détection de fuites.

De façon optionnelle, l'estimateur 38 de débit D remplit également une fonction d'estimation de température moyenne T à l'aide de la valeur efficace $Eff(R_N[E1+E2])$ fournie par le calculateur 30 et éventuellement de valeurs efficaces correspondantes de référence enregistrées dans la zone de mémoire 40. Ces valeurs efficaces de référence sont relatives à différentes températures apprises préalablement. La température moyenne T peut également être estimée à l'aide d'une relation connue entre la valeur efficace $Eff(R_N[E1+E2])$ et différentes valeurs de températures connues.

On notera que si le système 10 comporte une unité centrale électronique de commande 24 déportée par rapport aux transducteurs d'émission/réception E1, E2 et R, le système 10 pouvant même comporter plusieurs ensembles de transducteurs d'émission/réception E1, E2 et R répartis à plusieurs endroits différents du conduit 14 pour une même unité centrale électronique de commande 24, il comprend de façon connue en soi des moyens de transmission des mesures réalisées par le ou les récepteurs R vers l'unité centrale électronique de commande 24 déportée. Ces moyens peuvent être de technologie radiofréquence ou acoustique et conçus pour une transmission de proche en proche d'un ensemble de transducteurs à l'autre ou directement de chaque ensemble vers l'unité centrale.

Un procédé de mesure d'un débit de fluide et optionnellement d'une température par traitement d'ondes acoustiques mis en oeuvre par le système 10 précédemment décrit va maintenant être détaillé en référence à la figure 2. Il s'exécute dans un contexte de surveillance du débit de fluide alternant des phases de sommeil et des phases de mesures avec reconnaissance, archivage et/ou transmission des données recueillies.

En phase de mesure, au cours d'une étape 100, des ondes acoustiques de volume sont émises de façon synchronisée, en phase ou en opposition de phase, dans le fluide 12 s'écoulant à l'intérieur du conduit 14, par les émetteurs E1 et E2 sur commande du microcontrôleur d'émission/réception 26.

Au cours d'une étape 102, les ondes acoustiques émises sont reçues par le récepteur R après s'être propagées dans le fluide 12 et avoir interféré entre elles. Le microcontrôleur d'émission/réception 26 traite le signal analogique renvoyé par le récepteur R pour fournir un signal électrique numérisé au module de traitement 28.

Les étapes 100 et 102 sont répétées en boucles successives de mesures au cours desquelles les émissions sont par exemple alternativement en phase et en opposition de phase pour engendrer respectivement des interférences constructives, destinées à être traitées par le calculateur 30, et des interférences destructives, destinées à être traitées par le calculateur 32.

Au cours d'une étape 104, sur exécution des calculateurs 30 et 32, ainsi que du convertisseur temps/fréquence 34 et de l'extracteur 36 à l'occasion d'une N-ième mesure, la valeur efficace $Eff(R_N[E1+E2])$ ainsi que les caractéristiques précitées $Eff(R'_N)$, RD(N), RMSD(N), BR(N) et/ou RDR(N) sont extraites des mesures et transmises à l'estimateur 38 de débit D et de température T.

Enfin, au cours d'une étape 106 de détermination de température et de débit, l'estimateur 38 détermine une valeur de température T et une valeur de débit D en fonction respectivement de la valeur efficace $Eff(R_N[E1+E2])$ et des caractéristiques qui lui ont été fournies.

Dans une variante de réalisation particulièrement simple, seule les valeurs efficaces $Eff(R_N[E1+E2])$ et $Eff(R'_N)$ peuvent être calculées et transmises à l'estimateur 38. En effet, sous réserve d'une bonne disposition relative des émetteurs E1, E2 et du récepteur R (i.e. transducteurs alignés et récepteurs E1, E2 équidistants du récepteur R, bonne isolation acoustique directe), sous réserve également que les amplitudes des signaux émis par les émetteurs E1 et E2 aient bien été équilibrées au préalable, la situation de référence, représentée par la mesure de $R'_0(t)$ en opposition de phase, correspondant par exemple à une situation initiale de débit nul ou minimal au cours d'une durée prédéterminée d'observation, peut produire une mesure de $R'_0(t)$ en opposition de phase telle que la valeur efficace correspondante $Eff(R'_0)$ est nulle ou quasi nulle et telle que toute augmentation de débit implique une augmentation correspondante de la valeur $Eff(R'_N)$ selon une relation prédéterminée simple voire même linéaire. Cela est dû au fait que toute augmentation de débit éloigne les interférences destructives de la situation d'opposition de phase initiale par effet de différence de temps de transit entre le sens amont-aval et le sens avalamont, et donc par un effet de déphasage, induisant linéairement une augmentation de valeur efficace du signal résultant. Dans ce cas, la détermination du débit au cours de l'étape 106 peut se faire simplement, sans comparaison de signatures, par application d'une relation bijective connue à l'avance entre les valeurs possibles de $Eff(R'_N)$ et celles du débit sur une plage de valeurs d'intérêt considérée. La détermination de la température au cours de l'étape 106 peut également se faire simplement, sans comparaison avec des valeurs efficaces de référence, par application d'une relation bijective connue à l'avance entre les valeurs possibles de $Eff(R_N[E1+E2])$ et celles de la température sur une plage de valeurs d'intérêt considérée.

En outre, étant donné que les valeurs efficaces de signaux électriques peuvent être obtenues en technologie analogique, il est même possible dans ce cas de se passer de moyens de numérisation des signaux et de moyens numériques de traitement de sorte que le microcontrôleur d'émission/réception 26 et le module de traitement 28 de l'unité centrale électronique de commande 24 pourraient être réduits à leur plus simple expression en n'employant que des composants électroniques analogiques.

Dans une variante de réalisation plus complexe mais plus performante, les différentes caractéristiques précitées peuvent être calculées et transmises à l'estimateur 38. Dans ce cas, pour une N-ième mesure donnée, ces caractéristiques peuvent être librement combinées entre elles selon plusieurs choix possibles adaptables en fonction des contextes d'application pour former une signature à comparer à des caractéristiques de références, elles-mêmes combinées entre elles de la même façon pour former des signatures de référence, préalablement apprises pour une pluralité de débits et enregistrées dans la zone de mémoire 40.

Dans ce cas, une fonction de distance ou de coût prédéfinie à optimiser au cours de l'étape 106 permet de sélectionner parmi les signatures de référence celle qui se rapproche le plus de la signature correspondant à la mesure en cours et d'en déduire le débit correspondant.

A titre d'exemple non limitatif, il est possible à l'étape 106 pour l'estimateur 38, compte tenu des caractéristiques calculées $Eff(R'_N)$, $RD(N)$, $RMSD(N)$, $BR(N)$ et $RDR(N)$, de procéder de la façon suivante :

- a) sélection dans la zone de mémoire 40 d'un ensemble restreint de signatures de référence associées à des valeurs efficaces situées dans un voisinage prédéterminé de la valeur efficace courante $Eff(R'_N)$, ces valeurs efficaces pouvant par ailleurs être représentatives d'un débit quantifiable assez grossièrement en première approximation, ainsi que d'une température moyenne de conduit 12 correspondant à la valeur efficace $Eff(R_N[E1+E2])$,
- b) calcul de distances entre la valeur vectorielle courante de perturbation $RD(N)$ et chacune des valeurs vectorielles de perturbation de référence de l'ensemble restreint sélectionné,
- c) calcul du ratio entre la moyenne des distances calculées précédemment et la plus petite de ces distances, ce ratio définissant un rapport de contraste des distances calculées,
- d) si le ratio calculé ci-dessus est supérieur à un seuil prédéterminé, par exemple 150 %, sélection de la valeur de débit associée à la plus petite des distances calculées précédemment en tant que valeur d'estimation et sortie du procédé,
- e) si le ratio calculé ci-dessus est inférieur au seuil prédéterminé, élargissement du voisinage autour de la valeur efficace courante $Eff(R'_N)$ et retour à l'étape a),
- f) remontée d'une information d'anomalie si, malgré une recherche de distance minimale impliquant la totalité des signatures de référence, le ratio ci-dessus reste inférieur au seuil prédéterminé.

Dans le cas de cette variante de réalisation plus complexe impliquant des comparaisons de signatures, une phase d'apprentissage est nécessaire pour alimenter la zone de mémoire 40 en signatures de référence. Elle va maintenant être détaillée en référence à la figure 3.

Au cours d'une première étape 200 correspondant à l'exécution d'une ou plusieurs boucles de mesures conformes aux étapes 100 et 102, des signaux électriques sont relevés par le récepteur R alors qu'un débit de fluide 12 dans le conduit 14 est connu à l'avance et qu'une température est également éventuellement connue à l'avance.

Au cours d'une étape 202 exécutée pour chaque boucle de mesure, sur exécution des calculateurs 30 et 32, ainsi que du convertisseur temps/fréquence 34 et de l'extracteur 36, les caractéristiques de référence $Eff(R'_0)$, $RD(0)$, $RMSD(0)$, $BR(0)$ et/ou $RDR(0)$ sont extraites des mesures et combinées entre elles, selon le choix de l'homme du métier, pour former une signature de référence. Cette signature de référence est avantageusement normalisée comme détaillé précédemment pour la rendre indépendante des conditions environnantes telles que la température, tout en rendant compte d'une valeur de température moyenne de conduit. La valeur efficace de référence $Eff(R_0[E1+E2])$ peut également être extraite des mesures.

Enfin, au cours d'une étape 204, une signature de référence finale, éventuellement obtenue par un calcul de moyenne de plusieurs signatures de référence issues de plusieurs boucles de mesures, est enregistrée dans la zone de mémoire 40 en relation avec le débit et la température connus à l'avance. De la même façon, une valeur efficace de référence finale pour les interférences constructives peut être obtenue et enregistrée indépendamment dans la zone de mémoire 40 en relation avec la température connue à l'avance.

On notera que la phase d'apprentissage peut se faire sur la base d'autant de débits que souhaités selon l'application envisagée, par exemple sur une plage de vitesses d'écoulement étendue allant de 0,001 m/s à plus de 10 m/s et avec un pas de mesure qui n'est pas forcément constant, mais dépendant de l'application envisagée. Par exemple, dans le cas où l'on cherche à détecter des fuites, la phase d'apprentissage peut alimenter une base de données de débits couvrant 1000 à 10000 débits différents, mais avec une résolution élevée sur la mesure de faibles débits et une résolution moins élevée et constante sur la portion supérieure de la plage de débits visée. Il en va de même pour la fluctuation du signal $Eff(R_N[E1+E2])$ en fonction de la température moyenne du conduit 12 dans lequel se propagent les ondes.

On notera également que la phase d'apprentissage peut se faire pour des conduits et des fluides de différents types dont les caractéristiques (matière, diamètre, ...) ne sont pas nécessairement connues, par exemple un conduit de diamètre inconnu en plastique tel que le polychlorure de vinyle, en ciment, en métal ou autre, un fluide tel que de l'eau, essence, gazole, huile, émulsion ou autre. On peut ainsi constituer une base de données aussi riche que souhaité, la phase d'apprentissage étant indépendante des matériaux et des caractéristiques précités.

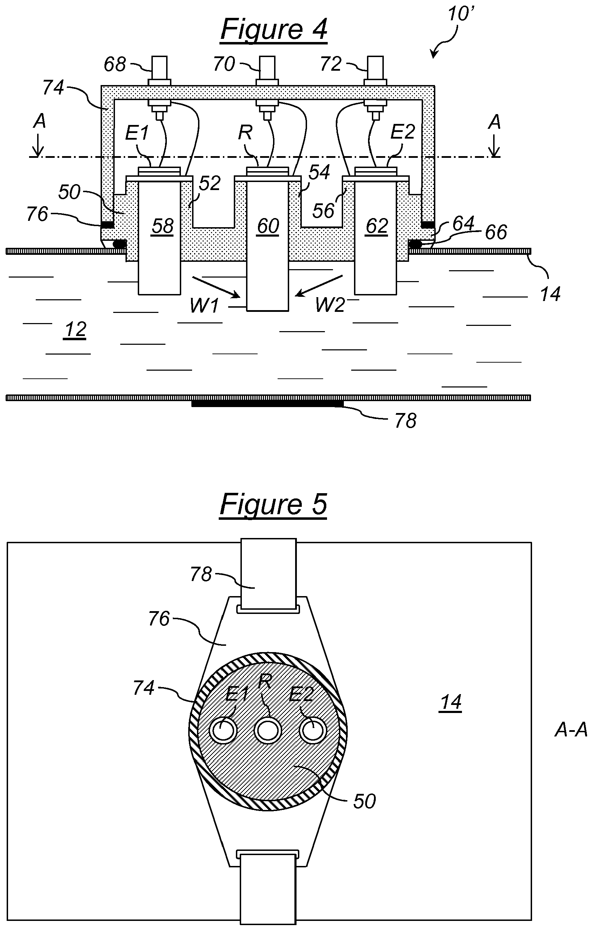

La figure 4 représente schématiquement et partiellement un système 10' de mesure d'un débit de fluide par traitement d'ondes acoustiques, selon un autre mode de réalisation possible de l'invention. Ce système 10' peut comporter la même unité centrale électronique de commande 24 que le système 10 de sorte qu'elle n'est pas illustrée de nouveau.

Le système 10' se distingue principalement du système 10 par la façon dont les transducteurs d'émisssion/réception E1, E2 et R, identiques à ceux du premier mode de réalisation, sont couplés au conduit 14, pour une transmission optimale des ondes acoustiques W1 et W2 dans le fluide 12.

Le couplage est réalisé à l'aide d'un support monolithique 50 commun aux trois transducteurs E1, R, E2 et servant de gabarit, conçu comme le support 16 précédemment décrit pour favoriser le couplage acoustique avec le fluide 12 tout en réduisant au maximum le couplage acoustique direct entre les émetteurs E1, E2 et le récepteur R.

Ce support monolithique 50 est par exemple réalisé par injection ou frittage de poudre en matière plastique (Polyamide, PVC, ABS ou autre) et présente une portion inférieure dont le périmètre, par exemple circulaire de diamètre compris entre 10 et 30 mm lorsque le conduit 14 est de diamètre proche de 100 mm, correspond à celui d'une unique ouverture traversante correspondante percée dans la paroi du conduit 14. Il est ainsi inséré dans le conduit 14 de sorte que la base de sa portion inférieure affleure à l'intérieur du conduit avec le même rayon de courbure.

Il comporte en outre, formés dans la même matière que la portion inférieure, trois guides d'ondes 52, 54, 56 percés le long de leur axe principal de guidage des ondes pour accueillir par insertion en force, ou avec collage, ou avec pas de vis, trois tiges cylindriques 58, 60, 62 en métal, typiquement en aluminium, inox, titane biocompatible, cuivre ou laiton. Les trois tiges cylindriques 58, 60, 62 sont tronquées et planes à leurs extrémités notamment pour recevoir sur leur extrémité supérieure hors du conduit 14 respectivement l'émetteur E1, le récepteur R et l'émetteur E2. Elles ont un diamètre compris entre 1 et 5 mm, préférentiellement 3 mm, et une longueur allant de 1 à 150 mm, préférentiellement 25 mm. Les deux tiges 58 et 62 supportant les deux émetteurs E1 et E2 sont de préférence de même diamètre et de même longueur. La tige centrale 60 supportant le récepteur R peut avoir une longueur un peu supérieure de quelques millimètres sachant que l'angle de réfraction des ondes acoustiques W1 et W2 depuis les tiges émettrices 58, 62 vers la tige centrale 60 dans le fluide 12 est oblique, par exemple voisin de 14° par rapport à la normale à l'axe principal de chaque tige pour des ondes acoustiques quasi longitudinales rayonnant depuis une tige en aluminium dans l'eau.

Les trois guides 52, 54, 56 sont configurés pour que les trois transducteurs soient alignés, l'émetteur R au milieu et à égale distance, comprise entre 1 et 25 mm, préférentiellement autour de 10 mm, des deux émetteurs E1, E2.

L'extrémité inférieure de chaque tige cylindrique 58, 60 ou 62 émerge de la base de la portion inférieure du support 50 à l'intérieur du conduit 14, par exemple d'une profondeur comprise entre 0,5 et 10 longueurs d'onde pour les deux tiges émettrices, c'est-à-dire 0,75 mm à 15 mm pour un fonctionnement à 4 MHz dans l'aluminium.

L'affleurement de la base de la portion inférieure du support monolithique 50, par défaut nul, peut s'étendre malgré tout sur une légère profondeur pour amener les tiges plus loin au coeur du conduit 14.

Le support monolithique 50 présente en outre un épaulement 64 au-dessus de sa portion inférieure destiné à être plaqué contre la paroi externe du conduit 14 et conformé pour cela selon le même rayon de courbure. Un joint annulaire 66 entourant la portion inférieure du support monolithique 50 sous l'épaulement assure l'étanchéité de l'ensemble.

Le support monolithique 50 présente une épaisseur aussi faible que possible pour limiter le couplage direct entre les tiges émettrices 58, 62 et la tige réceptrice 60, mais au moins égale à l'épaisseur de la paroi du conduit 14. Elle est choisie sur une plage de valeurs allant de 1 à 10 mm, préférentiellement 5 mm, les trois guides émergeant d'une épaisseur supplémentaire de 5 mm, de sorte que les trois tiges cylindriques soient maintenues sur une longueur de 10 mm, suffisante pour contenir la pression régnant dans le conduit.

Les trois transducteurs E1, R, E2 sont par exemple disposés sur les trois tiges cylindriques 58, 60, 62 par collage au moyen d'une colle époxy conductrice ou d'une colle mince de type cyanoacrylate ou par brasure métallique par exemple sur des tiges en laiton. Ils sont reliées à l'unité centrale électronique de commande 24 par des cordons reliés à des connecteurs coaxiaux 68, 70, 72 vissés sur une embase 74. L'embase 74 joue en outre le rôle de capuchon protecteur pour le support monolithique 50, ses trois guides 52, 54, 56, les trois tiges cylindriques 58, 60, 62 et les trois transducteurs E1, R, E2. L'embase 74 est étanche et encliquetée, collée ou sertie au support monolithique 50.

En outre, un bracelet 76 avec collier de serrage 78 est coincé entre l'embase 74 et le support monolithique 50. Il est clairement visible en position montée autour du conduit 14 sur la figure 5 qui représente l'ensemble en vue de dessus à une autre échelle, selon une coupe A-A indiqué en figure 4.

Ce mode de réalisation présente plusieurs avantages par rapport au précédent. Il est tout d'abord plus compact, les transducteurs étant plus rapprochés sur le support 50. En outre, par traversée de la paroi du conduit 14, le couplage ne dépend plus du matériau de cette paroi et est ainsi optimisé. Enfin, un seul trou est formé dans le conduit 14 pour le passage des trois tiges cylindriques d'émission/réception des ondes acoustiques.

Il apparaît clairement qu'un système de mesure d'un débit de fluide par traitement d'ondes acoustiques tel que l'un de ceux décrits précédemment permet d'estimer simplement et efficacement ce débit. Il permet également optionnellement d'estimer simplement et efficacement une température moyenne locale.

Dans le cas d'une implémentation avec phase d'apprentissage, il n'est même pas nécessaire de disposer d'informations sur la nature du fluide ou sur les caractéristiques d'un conduit dans lequel il circule pour remonter à la valeur de débit ou de température. Par ailleurs, en jouant sur la qualité de l'apprentissage on joue directement sur la qualité de l'estimation en phase de mesure de débit et de température moyenne locale.

Il est en outre possible grâce à un tel système de détecter des fuites, par exemple en se fixant des seuils acceptables de perturbation du débit, de façon simultanée en plusieurs endroits d'un réseau de distribution de fluide.

Par ailleurs, la configuration des deux modes de réalisation précédemment décrits, par plaquage externe des transducteurs d'émission/réception contre un conduit ou par perçage d'une structure compacte en une unique localisation du conduit, simplifie les opérations de pose mécanique du système. Elles peuvent être rapides et robustes.

Enfin, la disposition respective des deux émetteurs et du récepteur permet un confinement de la mesure dans une portion de conduit clairement limitée par les deux émetteurs.

On notera par ailleurs que l'invention n'est pas limitée aux modes de réalisation décrits précédemment.

En variante, le récepteur R est par exemple un transducteur piézoélectrique formé d'un disque en céramique dont l'électrode supérieure est divisée en deux demi-disques. Le signal électrique fourni par ce récepteur R est alors construit à partir d'une mesure différentielle sur les deux demi-disques. Dans cette configuration particulière, les émetteurs E1 et E2 doivent émettre des ondes acoustiques en phase pour qu'il y ait interférence destructive au niveau du récepteur R. Cette configuration est pratique lorsque l'on souhaite exciter les deux émetteurs par un même étage de sortie d'une électronique de commande et limiter le nombre de composants. Mais bien sûr, dans ce cas, il n'y a pas d'équilibrage possible entre les deux voies émettrices.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

**1.** Système (10 ; 10') de mesure d'un débit (D) de fluide (12) par traitement d'ondes acoustiques, comportant :

- un récepteur (R) d'ondes acoustiques de volume après leur propagation dans le fluide (12), conçu pour fournir un signal électrique à partir des ondes acoustiques reçues,
- un premier émetteur (E1) d'ondes acoustiques de volume dans le fluide (12), destiné à être disposé en amont du récepteur (R) par rapport au sens d'écoulement du fluide de manière à émettre des ondes acoustiques (W1) vers le récepteur (R),
- un deuxième émetteur (E2) d'ondes acoustiques de volume dans le fluide (12), différent du récepteur (R) et du premier émetteur (E1), destiné à être disposé en aval du récepteur (R) par rapport au sens d'écoulement du fluide (12) de manière à émettre des ondes acoustiques vers le récepteur (R),
- des moyens (26) de synchronisation des premier et deuxième émetteurs (E1, E2) entre eux, et
- un dispositif (28) de traitement de signal conçu pour déterminer une valeur de débit (D) en fonction d'au moins une caractéristique du signal électrique fourni,

**caractérisé en ce que** les moyens de synchronisation (26) sont conçus de manière à engendrer des interférences acoustiques destructives entre les ondes acoustiques (W1) émises par le premier émetteur (E1) et celles (W2) émises par le deuxième émetteur (E2) avant leur réception par le récepteur (R).

**2.** Système (10 ; 10') de mesure d'un débit (D) de fluide (12) selon la revendication 1, dans lequel :

- les moyens de synchronisation (26) sont en outre conçus de manière à engendrer des interférences acoustiques constructives entre les ondes acoustiques (W1) émises par le premier émetteur (E1) et celles (W2) émises par le deuxième émetteur (E2) avant leur réception par le récepteur (R), et
- le dispositif (28) de traitement de signal est en outre conçu pour déterminer une valeur de température (T) en fonction d'au moins une caractéristique du signal électrique fourni lorsque ce dernier résulte de ces interférences acoustiques constructives.

**3.** Système (10 ; 10') de mesure d'un débit (D) de fluide (12) selon la revendication 2, dans lequel les moyens de synchronisation (26) sont conçus pour commander alternativement :

- l'émission simultanée, par les premier et deuxième émetteurs (E1, E2), d'ondes acoustiques modulées en fréquence en opposition de phase, destinées à engendrer des interférences acoustiques destructives entre elles avant leur réception par le récepteur (R), et
- l'émission simultanée, par les premier et deuxième émetteurs (E1, E2), d'ondes acoustiques modulées en fréquence en phase, destinées à engendrer des interférences acoustiques constructives entre elles avant leur réception par le récepteur (R).

**4.** Système (10 ; 10') de mesure d'un débit (D) de fluide (12) selon l'une quelconque des revendications 1 à 3, comportant en outre un support monolithique (16 ; 50) de couplage des premier et deuxième émetteurs (E1, E2) et du récepteur (R) au fluide (12), le premier émetteur (E1), le deuxième émetteur (E2) et le récepteur (R) étant disposés sur des guides d'ondes (18, 20, 22 ; 52, 54, 56) de ce support monolithique (16 ; 50) de manière à :

- être alignés,
- présenter une même distance entre les deux émetteurs (E1, E2), d'une part, et le récepteur (R), d'autre part, et
- émettre ou recevoir principalement par réfraction des ondes acoustiques vers ou depuis le fluide (12).

**5.** Système (10) de mesure d'un débit (D) de fluide (12) selon la revendication 4, dans lequel le support monolithique (16) présente une base conformée avec les guides d'ondes (18, 20, 22) de manière à épouser la forme d'une paroi externe d'un conduit (14) dans lequel le fluide (12) est destiné à s'écouler et dans lequel au moins un bracelet avec collier de serrage est prévu pour entourer le conduit (14) dans lequel le fluide (12) est destiné à s'écouler à l'aplomb de chacun des premier et deuxième émetteurs (E1, E2) et du récepteur (R) de manière à plaquer ou coller le support monolithique (16) contre la paroi externe du conduit (14).

**6.** Système (10') de mesure d'un débit (D) de fluide (12) selon la revendication 4, dans lequel :

- le support monolithique (50) présente une portion inférieure surmontée d'un épaulement (64) conformé de manière à épouser la forme d'une paroi externe d'un conduit (14) dans lequel le fluide (12) est destiné à s'écouler, ladite portion inférieure étant ainsi destinée à traverser la paroi du conduit (14) en une unique ouverture traversante dont le périmètre correspond à celui de la portion inférieure,
- chaque guide d'onde (52, 54, 56) comporte, le long de son axe principal de guidage des ondes acoustiques, une tige métallique (58, 60, 62) dont une première extrémité supporte l'un des émetteurs (E1, E2) ou le récepteur (R) et dont une deuxième extrémité émerge de la base de la portion inférieure de manière à s'étendre à l'intérieur du conduit (14) dans lequel le fluide (12) est destiné à s'écouler, et
- au moins un bracelet (76) avec collier de serrage (78) est prévu pour entourer le conduit (14) dans lequel le fluide (12) est destiné à s'écouler à l'aplomb du support monolithique (50) de manière à plaquer ou coller le support monolithique (50) contre la paroi externe du conduit (14).

**7.** Système (10') de mesure d'un débit (D) de fluide (12) selon la revendication 6, dans lequel :

- les tiges (58, 62) supportant les premier et deuxième émetteurs (E1, E2) sont de même longueur et de même diamètre, et
- la tige (60) supportant le récepteur (R) présente une longueur supérieure à celle des tiges (58, 62) supportant les premier et deuxième émetteurs (E1, E2), de manière à s'étendre davantage à l'intérieur du conduit (14) dans lequel le fluide (12) est destiné à s'écouler.

**8.** Système (10 ; 10') de mesure d'un débit (D) de fluide (12) selon l'une quelconque des revendications 1 à 7, dans lequel le premier émetteur (E1), le deuxième émetteur (E2) et le récepteur (R) sont des transducteurs piézoélectriques résonnant en épaisseur.

**9.** Procédé de mesure d'un débit de fluide (12) par traitement d'ondes acoustiques, comportant :

- l'émission (100, 102) d'ondes acoustiques de volume dans le fluide (12), par un premier émetteur (E1) disposé en amont d'un récepteur (R) par rapport au sens d'écoulement du fluide (12) de manière à émettre des ondes acoustiques (W1) vers le récepteur (R),
- l'émission (100, 102) d'ondes acoustiques de volume dans le fluide (12), par un deuxième émetteur (E2) différent du récepteur (R), différent du premier émetteur (E1) et disposé en aval du récepteur (R) par rapport au sens d'écoulement du fluide (12) de manière à émettre des ondes acoustiques (W2) vers le récepteur (R),
- une synchronisation (100, 102) des premier et deuxième émetteurs (E1, E2) entre eux,
- la réception (100, 102), par le récepteur (R), d'ondes acoustiques de volume après leur propagation dans le fluide (12) et la fourniture, par le récepteur (R), d'un signal électrique à partir des ondes acoustiques reçues, et
- la détermination (106), par un dispositif de traitement de signal (28), d'une valeur de débit (D) en fonction d'au moins une caractéristique du signal électrique fourni,

**caractérisé en ce que** la synchronisation (100, 102) est réalisée de manière à engendrer des interférences acoustiques destructives entre les ondes acoustiques (W1) émises par le premier émetteur (E1) et celles (W2) émises par le deuxième émetteur (E2) avant leur réception par le récepteur (R).

10. Procédé de mesure d'un débit de fluide (12) selon la revendication 9, dans lequel la détermination (106) d'une valeur de débit (D) en fonction d'au moins une caractéristique du signal électrique fourni comporte la constitution d'une signature à partir de ladite au moins une caractéristique du signal électrique fourni et la comparaison de cette signature à plusieurs signatures de référence (40) constituées de la même façon lors d'une phase préalable d'apprentissage (200, 202, 204) exécutée pour une pluralité de débits.

## Patentansprüche

1. System (10; 10') zum Messen eines Fluiddurchsatzes (D) (12) durch Verarbeitung von Schallwellen, umfassend:

- einen Empfänger (R) von Volumenschallwellen nach ihrer Ausbreitung im Fluid (12), der entworfen ist, um ein elektrisches Signal ausgehend von den empfangenen Schallwellen zu liefern,
- einen ersten Sender (E1) von Volumenschallwellen im Fluid (12), der ausgelegt ist, um vorgelagert vom Empfänger (R) mit Bezug auf die Abflussrichtung des Fluids angeordnet zu sein, um Schallwellen (W1) hin zum Empfänger (R) zu senden,
- einen zweiten Sender (E2) von Volumenschallwellen im Fluid (12), der verschieden vom Empfänger (R) und vom ersten Sender (E1) ist, der ausgelegt ist, um nachgelagert vom Empfänger (R) mit Bezug auf die Abflussrichtung des Fluids (12) angeordnet zu sein, um Schallwellen hin zum Empfänger (R) zu senden,
- Mittel (26) zum Synchronisieren des ersten und zweiten Senders (E1, E2) untereinander, und
- eine Vorrichtung (28) zum Verarbeiten des Signals, die entworfen ist, um einen Durchsatzwert (D) je nach mindestens einer Eigenschaft des gelieferten elektrischen Signals zu bestimmen,

**dadurch gekennzeichnet, dass** die Mittel zum Synchronisieren (26) derart sind, um destruktive Schallinterferenzen zwischen den Schallwellen (W1), die vom ersten Sender (E1) gesendet werden, und denjenigen (W2), die vom zweiten Sender (E2) gesendet werden, vor ihrem Empfang durch den Empfänger (R) zu erzeugen.

2. System (10; 10') zum Messen eines Fluiddurchsatzes (D) (12) nach Anspruch 1, wobei:

- die Mittel zum Synchronisieren (26) außerdem entworfen sind, um konstruktive Schallinterferenzen zwischen den Schallwellen (W1), die vom ersten Sender (E1) gesendet werden, und denjenigen (W2), die vom zweiten Sender (E2) gesendet werden, vor ihrem Empfang durch den Empfänger (R) zu erzeugen, und
- die Vorrichtung (28) zum Verarbeiten des Signals außerdem entworfen ist, um einen Temperaturwert (T) je nach mindestens einer Eigenschaft des elektrischen Signals, das geliefert wird, wenn sich dieses Letztere aus diesen konstruktiven Schallinterferenzen ergibt, zu bestimmen.

3. System (10; 10') zum Messen eines Fluiddurchsatzes (D) (12) nach Anspruch 2, wobei die Mittel zum Synchronisieren (26) entworfen sind, um alternativ Folgendes zu steuern:

- die gleichzeitige Sendung, durch den ersten und den zweiten Sender (E1, E2), von frequenzmodulierten gegenphasigen Schallwellen, die ausgelegt sind, um destruktive Schallinterferenzen zwischen ihnen vor ihrem Empfang durch den Empfänger (R) zu erzeugen, und
- die gleichzeitige Sendung, durch den ersten und zweiten Sender (E1, E2) von frequenzmodulierten phasigen Schallwellen, die ausgelegt sind, um konstruktive Schallinterferenzen zwischen ihnen vor ihrem Empfang durch den Empfänger (R) zu erzeugen.

4. System (10; 10') zum Messen eines Fluiddurchsatzes (D) (12) nach einem der Ansprüche 1 bis 3, umfassend außerdem einen monolithischen Träger (16; 50) zum Koppeln des ersten und zweiten Senders (E1, E2) und des Empfängers (R) an das Fluid (12), wobei der erste Sender (E1), der zweite Sender (E2) und der Empfänger (R) auf Wellenleitern (18, 20, 22; 52, 54, 56) dieses monolithischen Trägers (16; 50) angeordnet sind, so dass sie:

   - ausgefluchtet sind,
   - eine gleiche Distanz zwischen den zwei Sendern (E1, E2) einerseits und dem Empfänger (R) andererseits aufweisen, und
   - hauptsächlich durch Brechung der Schallwellen hin zu oder von dem Fluid (12) senden oder empfangen.

5. System (10) zum Messen eines Fluiddurchsatzes (D) (12) nach Anspruch 4, wobei der monolithische Träger (16) eine Basis aufweist, die mit den Wellenleitern (18, 20, 22) übereinstimmt, um die Form einer äußeren Wand einer Leitung (14) anzunehmen, in der das Fluid (12) ausgelegt ist, um abzufließen, und in der mindestens ein Reif mit einem Spannring vorgesehen ist, um die Leitung (14) zu umgeben, in der das Fluid (12) ausgelegt ist, um senkrecht zu jedem des ersten Senders (E1, E2) und des Empfängers (R) abzufließen, um den monolithischen Träger (16) gegen die äußere Wand der Leitung (14) zu drücken oder zu kleben.

6. System (10') zum Messen eines Fluiddurchsatzes (D) (12) nach Anspruch 4, wobei:

   - der monolithische Träger (50) einen unteren Abschnitt aufweist, der von einem übereinstimmenden Absatz (64) überragt ist, um die Form einer externen Wand einer Leitung (14) einzunehmen, in der das Fluid (12) ausgelegt ist, um abzufließen, wobei der untere Abschnitt somit ausgelegt ist, um die Wand der Leitung (14) in einer einzigen Queröffnung zu queren, deren Umfang demjenigen des unteren Abschnitts entspricht,
   - jeder Wellenleiter (52, 54, 56) entlang seiner Hauptleitachse der Schallwellen einen metallischen Stift (58, 60, 62) umfasst, von dem ein erstes Ende einen der Sender (E1, E2) oder den Empfänger (R) trägt, und von dem ein zweites Ende aus der Basis des unteren Abschnitts hervorragt, um sich in das Innere der Leitung (14) zu erstrecken, in der das Fluid (12) ausgelegt ist, um abzufließen, und
   - mindestens ein Reif (76) mit einem Spannring (78) vorgesehen ist, um die Leitung (14) zu umgeben, in der das Fluid (12) ausgelegt ist, um senkrecht zum monolithischen Träger (50) abzufließen, um den monolithischen Träger (50) gegen die äußere Wand der Leitung (14) zu drücken oder zu kleben.

7. System (10') zum Messen eines Fluiddurchsatzes (D) (12) nach Anspruch 6, wobei:

   - die Stifte (58, 62), die den ersten und den zweiten Sender (E1, E2) tragen, die gleiche Länge und den gleichen Durchmesser haben, und
   - der Stift (60), der den Empfänger (R) trägt, eine Länge aufweist, die größer als diejenige der Stifte (58, 62) ist, die den ersten und den zweiten Sender (E1, E2) tragen, um sich weiter in das Innere der Leitung (14) zu erstrecken, in der das Fluid (12) ausgelegt ist, um abzufließen.

8. System (10; 10') zum Messen eines Fluiddurchsatzes (D) (12) nach einem der Ansprüche 1 bis 7, wobei der erste Sender (E1), der zweite Sender (E2) und der Empfänger (R) piezoelektrische Wandler sind, die in der Dicke schwingen.

9. Verfahren zum Messen eines Fluiddurchsatzes (12) zur Verarbeitung von Schallwellen, umfassend:

   - die Sendung (100, 102) von Volumenschallwellen im Fluid (12) durch einen ersten Sender (E1), der vorgelagert von einem Empfänger (R) mit Bezug auf die Abflussrichtung des Fluids (12) angeordnet ist, um Schallwellen (W1) hin zum Empfänger (R) zu senden,
   - die Sendung (100, 102) von Volumenschallwellen im Fluid (12) durch einen zweiten Sender (E2), der verschieden vom Empfänger (R) ist, der verschieden vom ersten Sender (E1) ist und nachgelagert vom Empfänger (R) mit Bezug auf die Abflussrichtung des Fluids (12) angeordnet ist, um Schallwellen (W2) hin zum Empfänger (R) zu senden,
   - eine Synchronisierung (100, 102) des ersten und zweiten Senders (E1, E2) untereinander,
   - den Empfang (100, 102), durch den Empfänger (R), von Volumenschallwellen nach ihrer Ausbreitung in Fluid (12), und die Lieferung, durch den Empfänger (R), eines elektrischen Signals, ausgehend von den empfangenen Schallwellen, und

- das Bestimmen (106), durch eine Vorrichtung zur Verarbeitung des Signals (28), eines Durchsatzwerts (D), je nach mindestens einer Eigenschaft des gelieferten elektrischen Signals,

**dadurch gekennzeichnet, dass** die Synchronisierung (100, 102) durchgeführt wird, um destruktive Schallinterferenzen zwischen den Schallwellen (W1), die vom ersten Sender (E1) gesendet werden, und denjenigen (W2), die vom zweiten Sender (E2) gesendet werden, vor ihrem Empfang durch den Empfänger (R) zu erzeugen.

10. Verfahren zum Messen eines Fluiddurchsatzes (12) nach Anspruch 9, wobei das Bestimmen (106) eines Durchsatzwerts (D) je nach mindestens einer Eigenschaft des gelieferten elektrischen Signals die Bildung einer Signatur ausgehend von der mindestens einen Eigenschaft des gelieferten elektrischen Signals und den Vergleich dieser Signatur mit mehreren Referenzsignaturen (40) umfasst, die bei einer vorhergehenden Phase des Lernens (200, 202, 204), ausgeführt für eine Vielzahl von Durchsätzen, auf gleiche Weise gebildet wird.

**Claims**

1. A system (10; 10') for measuring a flow rate (D) of fluid (12) by processing of acoustic waves, including:

   a receiver (R) of bulk acoustic waves after their propagation in the fluid (12), designed to supply an electrical signal based on the acoustic waves received,
   a first emitter (E1) of bulk acoustic waves in the fluid (12), intended to be arranged upstream of the receiver (R) with respect to the direction of flow of the fluid in such a way as to emit acoustic waves (W1) to the receiver (R),
   a second emitter (E2) of bulk acoustic waves in the fluid (12), different from the receiver (R) and from the first emitter (E1), intended to be arranged downstream of the receiver (R) with respect to the direction of flow of the fluid in such a way as to emit acoustic waves to the receiver (R),
   means (26) for synchronizing the first and second emitters (E1, E2) with each other; and
   a signal processing device (28) designed to determine a flow rate (D) value according to at least one characteristic of the electrical signal supplied,

   **characterized in that** the means for synchronizing (26) are designed in such a way as to generate destructive acoustic interferences between the acoustic waves (W1) emitted by the first emitter (E1) and those (W2) emitted by the second emitter (E2) before they are received by the receiver (R).

2. The system (10; 10') for measuring a flow rate (D) of fluid (12) according to claim 1, wherein:

   the means for synchronizing (26) are further designed in such a way as to generate constructive acoustic interferences between the acoustic waves (W1) emitted by the first emitter (E1) and those (W2) emitted by the second emitter (E2) before they are received by the receiver (R), and
   the signal processing device (28) is further designed to determine a temperature value (T) according to at least one characteristic of the electrical signal supplied when the latter is the result of these constructive acoustic interferences.

3. The system (10; 10') for measuring a flow rate (D) of fluid (12) according to claim 2, wherein the means for synchronizing (26) are designed to alternately control:

   the simultaneous emitting, by the first and second emitters (E1, E2), of frequency-modulated acoustic waves in phase opposition, intended to generate destructive acoustic interferences between them before they are received by the receiver (R), and
   the simultaneous emitting, by the first and second emitters (E1, E2), of frequency-modulated acoustic waves in phase, intended to generate constructive acoustic interferences between them before they are received by the receiver (R).

4. The system (10; 10') for measuring a flow rate (D) of fluid (12) according to any of claims 1 to 3, further including a monolithic support (16; 50) for coupling the first and second emitters (E1, E2) and the receiver (R) to the fluid (12), the first emitter (E1), the second emitter (E2) and the receiver (R) being arranged on waveguides (18, 20, 22; 52, 54, 56) of this monolithic support (16; 50) in such a way as to:

   be aligned,

have the same distance between the two emitters (E1, E2), on the one hand, and the receiver (R), on the other hand, and

emit or receive mainly by refraction acoustic waves to or from the fluid (12).

5.  The system (10) for measuring a flow rate (D) of fluid (12) according to claim 4, wherein the monolithic support (16) has a base formed with the waveguides (18, 20, 22) in such a way as to hug the shape of an external wall of a duct (14) wherein the fluid (12) is intended to flow and wherein at least one bracelet with clamping collar is provided to surround the duct (14) wherein the fluid (12) is intended to flow straight along with each one of the first and second emitters (E1, E2) and with the receiver (R) in such a way as to thrust or glue the monolithic support (16) against the external wall of the duct (14).

6.  The system (10') for measuring a flow rate (D) of fluid (12) according to claim 4, wherein:

    the monolithic support (50) has a lower portion topped by a shoulder (64) formed in such a way as to hug the shape of an external wall of a duct (14) wherein the fluid (12) is intended to flow, said lower portion as such being intended to pass through the wall of the duct (14) in a single through opening of which the perimeter corresponds to that of the lower portion,

    each waveguide (52, 54, 56) includes, along its main axis for guiding acoustic waves, a metal rod (58, 60, 62) of which a first end supports one of the emitters (E1, E2) or the receiver (R) and of which a second end emerges from the base of the lower portion in such a way as to extend inside the duct (14) wherein the fluid (12) is intended to flow, and

    at least one bracelet (76) with clamping collar (78) is provided to surround the duct (14) wherein the fluid (12) is intended to flow straight along with the monolithic support (50) in such a way as to thrust or glue the monolithic support (50) against the external wall of the duct (14).

7.  The system (10') for measuring a flow rate (D) of fluid (12) according to claim 6, wherein:

    the rods (58, 62) supporting the first and second emitters (E1, E2) are of the same length and of the same diameter; and

    the rod (60) supporting the receiver (R) has a length greater than that of the rods (58, 62) supporting the first and second emitters (E1, E2), in such a way as to extend further inside the duct (14) wherein the fluid (12) is intended to flow.

8.  The system (10; 10') for measuring a flow rate (D) of fluid (12) according to any of claims 1 to 7, wherein the first emitter (E1), the second emitter (E2) and the receiver (R) are piezoelectric transducers resonating in thickness.

9.  A method for measuring a flow rate of fluid (12) by processing of acoustic waves, including:

    the emitting (100, 102) of bulk acoustic waves in the fluid (12), by a first emitter (E1) arranged upstream of a receiver (R) with respect to the direction of flow of the fluid (12) in such a way as to emit acoustic waves (W1) to the receiver (R),

    the emitting (100, 102) of bulk acoustic waves in the fluid (12), by a second emitter (E2) different from the receiver (R), different from the first emitter (E1) and arranged downstream of the receiver (R) with respect to the direction of flow of the fluid (12) in such a way as to emit acoustic waves (W2) to the receiver (R),

    a synchronizing (100, 102) of the first and second emitters (E1, E2) with each other,

    the receiving (100, 102), by the receiver (R), of bulk acoustic waves after their propagation in the fluid (12) and the supplying, by the receiver (R), of an electrical signal using the acoustic waves received, and

    the determining (106), by a signal processing device (28), of a flow rate (D) value according to at least one characteristic of the electrical signal supplied,

    **characterized in that** the synchronizing (100, 102) is performed in such a way as to generate destructive acoustic interferences between the acoustic waves (W1) emitted by the first emitter (E1) and those (W2) emitted by the second emitter (E2) before they are received by the receiver (R).

10.  The method for measuring a flow rate of fluid (12) according to claim 9, wherein the determining (106) of a flow rate (D) value according to at least one characteristic of the electrical signal supplied comprises the constitution of a signature based on said at least one characteristic of the electrical signal supplied and the comparison of this signature with several reference signatures (40) constituted in the same way during a prior phase of learning (200, 202, 204) executed for a plurality of flow rates.

## Figure 1

## Figure 2

## Figure 3

## Figure 4

## Figure 5

A-A

**EP 3 086 098 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2901612 B1
- DE 4241225 A1
- US 5602343 A
- GB 2447691 A